(19)

Europäisches
Patentamt

European
Patent Office

Office européen
des brevets

(11) **EP 3 937 112 A1**

(12) **EUROPEAN PATENT APPLICATION**

(43) Date of publication:
**12.01.2022   Bulletin 2022/02**

(51) Int Cl.:
**G06Q 50/06** (2012.01)      **G06Q 10/06** (2012.01)
**H02J 3/12** (2006.01)

(21) Application number: **20184169.9**

(22) Date of filing: **06.07.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Kull, Karl**
**10143 Tallinn Harjumaa (EE)**

(72) Inventors:
• **Kull, Karl**
**10143 Tallinn (EE)**

• **Pill, Merylin**
**10922 Tallinn (EE)**
• **Tealane, Marko**
**46202 Väike-Maarja (EE)**
• **Kull, Tuule Mall**
**11314 Tallinn (EE)**
• **Maran, Priit**
**74001 Viimsi alevik (EE)**

(74) Representative: **Käosaar, Jüri**
**Käosaar & Co Patent Agency**
**Tähe 94**
**50107 Tartu (EE)**

(54) **METHOD FOR ENERGY CONSUMPTION MANAGEMENT BASED ON THE PRINCIPLE OF PRIMARY ENERGY SHARE IN THE SYSTEM**

(57)    The present invention relates to a technical solution in the field of electronics, whereby a controller or a control panel was used to control the consumption of the device according to the preferences of the primary power source of the user's power plants. The controller allows the consumer to determine from what source and how much of the power system's current production and energy is generated from one or another primary source of energy consumed. Energy produced locally in the consumer's internal network shall also be taken into account.

Thus, the controller allows consumers to control their electricity consumption and lead it to a time when the system is generating electricity from renewable energy sources beyond the limit set by the consumer. The invention describes a system that controls real-time consumption ($t \geq 0s$). The technical result of the invention is to reduce energy system losses by increasing the concomitance of consumption and production, thereby minimizing the carbon footprint of the energy consumed.

FIG 1

EP 3 937 112 A1

## Description

## TECHNICAL FIELD

The present invention belongs to the field of electronics and provides a technical solution in controllers related to electric and thermal energy, whereby transmission of a mutual proportion signal between the production units of power and heat network causes complete or partial adjustment of the consumption of an appliance or a device controlled by the controller with the objective to increase control over the consumption of the type of physically supplied energy in the appliance consuming the energy.

## BACKGROUND

Currently the consumers can regulate their consumption with a controller based on the price of electricity, but it is not possible to control consumption based on the type of primary energy. Consumption management principles and controller rules are currently based on the price of energy specified by developers of the technology and the public. Price-based controllers do not enable direct calculation of $CO_2$ and thus calculation of the carbon footprint and its adjustment by the consumer.

For example, the consumption management controllers and programs based and mainly based on the price of energy are used in trade centers. In the case of price-based management, whether the current price is equal to the current average price is checked during the operation of energy appliances. If they are equal, no management takes place. If they are not equal, new temperature setup value is calculated based on the current price, current average price, and limit values of temperature settings. Contemporary principles of dynamic consumption management target the electricity market and the consumer cannot control the physical origin of primary electrical energy.

## SUMMARY

The main objective of the invention is to enable management of consumption of an appliance with a controller or a control panel of the consumer based on the preferences of the user related to the primary energy source of power plants.

Also, the invention minimizes losses during the transport of electricity, as the correlation increases between the power of the appliance and local energy production.

Furthermore, the invention also resolves the problem of concomitance of production and consumption from the viewpoint of the energy system.

The controller allows the consumer to determine from which source and how much of the power system's current production and energy is generated from different primary sources of energy consumed in the appliance. Energy produced locally in the consumer's internal network is also taken into account. An objective of the invention is to lead electricity consumption to a time when the proportion of power of the type of primary energy produced in the electricity production unit specified by the appliance in the power system compared to the current electricity production capacity of the system is exceeding the limit set by the appliance or the consumer. The invention describes a system that controls real-time consumption ($t \geq 0$ s). The signal of mutual relationship between the power of production units installed in the system manages the controller based on the limits set by the consumer.

Thus, the controller enables the consumers to lead their electricity consumption to a time when the system is generating electricity from renewable energy sources beyond the limit set by the consumer, enabling the consumers to reduce their $CO_2$ emission.

Solution principle for managing consumption in appliances:

$$T_{consumption}, \text{ when } N\%_{system} \geq N\%_{set}$$

Where:

$T_{consumption}$ - period (moment) of energy consumption of the appliance;

$N\%_{system}$ - proportion of the specific production unit based on the primary energy source in the specific area of the power system;

$N\%_{set}$- conditional limit of the controller set to the energy consumer or appliance based on the proportions of the production units according to the specific primary energy source.

From the viewpoint of network, $N\%_{system}$ is calculated based on the amount of energy entering the area and the amount of energy provided for the network by local production units. Based on Kirchoff's First Law, the sum of electric currents entering a point and exiting from a point must be equal, therefore the amount of energy consumed by an appliance, which cannot be covered locally, enters the defined area from a higher area and other energy sources. Based on this law of physics, it is possible to calculate the percentage ratio of the energy requirement of the appliance covered by the energy produced locally (in the same area) in a defined area. Furthermore, it is possible to take account of the primary energy types used for energy production when calculating the ratio, and manage the appliance based on local energy production. Such a control method minimizes losses arising from the transport of electricity, as the correlation increases between the power of the appliance and local energy production.

Energy is consumed or the consumption capacity of the appliance is adjusted only when the period of consumed energy in the power or energy system has fallen to the point when the proportion of the types of primary energy sources of the energy production units of the area of the system has achieved the set proportion.

This solution is not limited only to a single type of primary energy of an energy production unit. This means that the controller of the appliance enables setting different levels of power ratio for different types of primary energy.

The solution ensures that the consumption of, for example, renewable energy or another type of energy production takes place as concomitantly as possible, i.e. the required concomitance of energy production and consumption is achieved in the system. This also resolves the problem of concomitance of production and consumption from the viewpoint of the energy system.

For example: the higher the number of consumers consuming during the production of green or nuclear energy, the less compensation is needed for production by conventional fossil fuel based production units. As the $CO_2$ emissions are lower, this is an economically optimal solution for quotas and thus beneficial for the entire society.

**EMBODIMENT OF THE INVENTION**

An energy consumption control/management system with **N%$_{set}$** principle is a computer with computing ability with the following features:

- User interface

    ◦ Local or web-based system for displaying, editing, and transferring parameters (described in detail below).

    ◦ Capability to set N%$_{set}$ level or to set allowed limits of an appliance based on the ratio of primary energy production unit in the area of the power system.

- Capability to transfer the signal of the power proportion between the production units in the system

    ◦ Internet or any other connection to the power network or another source, from which the signal is received about the share of primary energy sources of power plants in the system.

    ◦ Rights for information queries from the network or directly from the electricity producer.

    ◦ Output ports for transmitting the calculated signal.

- Encryption capability (optional)

- Capability to manage the energy consumption of an item/user/appliance (optional)
    ◦ With physical and digital rheostat or switch.

- Programmed algorithms with the following tasks:

    ◦ following the electricity consumption management principle based on the origin of the primary energy share in the system;
    ▪ Output signal is calculated based on the received network status signal and transmitted to the device.

    ◦ consolidating concomitance of consumption and production (optional);

        ▪ Stores (logs) consumption times and amounts of energy.

        ▪ Reads production information of various levels of network areas (see the following sub-chapter) and calculates concomitance of consumption and production on the local level.

        ▪ Reads production information of all used levels of network areas and calculates general concomitance of consumption and production, considering distance coefficients.

    ◦ calculating the carbon footprint of the consumer based on the primary energy consumption coefficients (optional).

Applicability of the methodology:
Consumption management in equipment with IoT (Internet of Things) capability according to N%$_{set}$ principle.
The equipment must be capable of receiving signals from the power systems of above-defined areas in order to ensure receiving information from the network in real time about the proportion of production units of the energy system (N%) in the network. For example, the invention enables managing consumption on the following levels:

    a) remotely managing the controller of the appliance based on N%$_{set}$ signal from the central unit;

    b) managing the consumption of the internal energy system of a consumer or an appliance with a controller based on N%$_{set}$ signal from the local energy management center of a building/plant;

    c) managing the consumption of the internal energy system of a consumer or an appliance based on N%$_{set}$ signal in a programmed unit with information/signal exchange with the system and computing capability (automatic);

d) separate energy consumption system set with N%set principle and connected to a power source, and with capability of information exchange with the energy system in the form of signals.

General application principles:

When implementing the methodology, the invention enables creating consumption profiles defined on the basis of $N\%_{system}$ and $N\%_{set}$ signals. The user/appliance always has the privilege over automatic settings and these can be edited. Generally, the invention applies similar principles as other inventions related to energy consumption management, but unlike the others, this invention applies the $N\%_{set}$ principle or the share of production capabilities of the system based on their primary energy source for consumption management. Activation of the consumption profile based on $N\%_{set}$ methodology means that one or more appliances operated by the user start to operate according to the rules of the consumption profile.

Consumption profile is the management of consumption by the invention based on the time schedule or $N\%_{set}$ rules.

If $N\%_{system}$ is lower than $N\%_{set}$, the controlled appliance is enabled to operate with lower power than nominal power (e.g. heating and cooling equipment) or the equipment is switched off (if use of lower power is impossible and deactivation is allowed). Allowed power limits and switching rules are defined by the user.

Rules of consumption profiles can be defined based on the parameters set by the user or depending on time, weekday, season, or other factors. The user can edit the rules through the user interface.

$N\%_{set}$ principle can be applied in the equipment, applications, and programs that manage energy consumption. The invention applies $N\%_{set}$ methodology in the energy consumption management system, where consumption can be adjusted via the user interface based on the set $N\%_{set}$ limits. Interactions of the user in the user interface are simple and compact, enabled by automatic algorithms. The user interface may control several appliances with rheostats with remote control capability and automatic equipment receiving the signal of the internal network of the user.

Rheostats, automatic elements, etc. of the appliances can be controlled or adjusted with any demand management (DM) system, which can be adapted to $N\%_{set}$ principle.

The user interface is:

a) a web-based system enabling the user/appliance to adjust the $N\%_{set}$ settings related to energy consumption via the Internet or a private network from any geographical location in the world;

b) a local human-machine interface enabling the user/appliance to locally adjust the $N\%_{set}$ settings re-

lated to energy consumption.

The rules and commands for using the energy consumption management shall be transmitted to the appliances when suitable conditions have been achieved or exceeded. Here, 'Command' is a broad term related to the instructions for controlling managed consumption. For example, commands can be 'increasing' or 'reducing' consumption, 'starting the appliance', 'switching off the appliance' (ending the consumption), when required by the rule.

The following is allowed in information transferring and calculation of $N\%_{system}$ proportion:

a) the calculation of the $N\%_{system}$ proportion by the system (e.g., by the energy management center of the system) and transmission to the controller as a suitable signal;

b) the calculation of the $N\%_{system}$ proportion locally by the DM (energy management software) based on the current concomitance status of the production volumes of the power system; DM uses N% proportion for deriving new commands for managed appliances;

c) the calculation of the $N\%_{system}$ proportion based on available information locally on the spot by the IoT or controller.

Hereby, it is important to note that the operation of the invention and transmission of commands allow direct management of consumers by the local controller, transmission of management operations to an appliance or appliance group via the consumption management software, or transmission of commands and operations centrally by the energy management center to consumers.

Hereby, it is important to note that the information exchange or the calculation of $N\%_{system}$ takes place in real time ($t \geq 0$ s).

Hereby, it is important to note that the user interface enables adjusting the management of appliances based on the estimated specific rate of the $N\%_{system}$ primary energy in the energy system.

It is also important to note that the user may exclude appliances from the $N\%_{set}$ principle and control of the user interface.

Definitions of the power system:

Situations may arise where the energy system selected by the appliance does not enable achieving the sufficient $N\%_{set}$ level for switching on or using the appliance with full power.

Hereby, it is important to note that upon calculation of the proportions of origin of primary energy in the system, combinations of various systems and categories, as well as movement between various levels of areas of the power system is allowed in order to ensure daily quality of life for the user and user convenience. Depending on the power system, it is possible that one or more area categories described in the invention cannot be used due to a lack of these categories in the power system environment of the appliance. Options of system area or category can be defined by the user/appliance in the central controller. This way, the appliance can use power proportions of the production units of higher level areas in order to compensate for the lack of required level in a lower category area, and to allow the appliance to operate if the system selected as a primary system is lacking the sufficient $N\%_{set}$ level. Coefficients of proportions of primary energy can be used in the movement of logic between areas for calculating the final proportion of $N\%_{set}$.

Infrastructure defined energetically based on nominal voltage is an option for defining the areas of the energy system: above-mentioned defined areas where proportions of the primary energy of production capacities mentioned in the invention are calculated. This category is divided into the following sub-categories:

1: First level category - local network area for the consumer/producer, delimited with the nominal voltage of the consumer and terminating in a substation. Generally this is electro-energetically a low voltage network (with a nominal voltage below 1 kV, incl.).

2: Second level category - network area delimited from one side with the voltage where the previous category terminates, and terminating in the following substation raising the voltage. Generally, this is electro-energetically a medium voltage network (with a nominal voltage of 1-50 kV, incl.).

3: Third level category - network area delimited from one side with the end of the previous category and from the other side with the transition border of the distribution network and transmission network. Generally, this is electro-energetically a high voltage network (with a nominal voltage of 51-220 kV).

4: Fourth level category - network area delimited from one side with the end of the previous network area and from the other side regionally (e.g. with the state border). Generally, this is an ultra high voltage network (220 kV and up).

5: Fifth level category - network area delimited from one side with the end of the previous category and from the other side regionally (e.g. with a frequency area).
Depending on the peculiarity of use of the methodology, voltage levels of limits can be adapted.
Hereby, it is important to note that depending on the site of application of the controller, other electro-energetic parameters can also be used for defining areas.

6: A system defined based on the energy market is another option for defining the system, where the proportion of energy is specified based on the origin of energy traded on the market. Energy with different origin has different primary energy and proportion in the system. This can be used for calculating the proportion of energy with relevant primary energy. The energy market may exist from transmission networks to trading platforms on the level of micro-networks, agreed between market participants.

Hereby, it is important to note that a consumption management controller with information receiving capability (ESM) can receive information and monitor/calculate the proportion of primary energy of the system in real time ($t \geq 0$ s).

In the first category, information is received from the control body of the local/micronetwork area. This can be a data concentrator in the substation or information transmitted by another network operator. In categories 2 to 4, the signal is usually received from a network operator. In the case of an energy market based solution, the signal is received from a relevant platform as a digital signal.

Generally, analog as well as digital information inputs are suitable for the invention.

The technical result of the invention is the reduction of energy system losses by increasing the concomitance of consumption and production, thereby minimizing the carbon footprint of the energy consumed.

## LIST OF FIGURES

The above-mentioned and other features and advantages of the invention are illustrated and exemplified by the figures listed below, where:

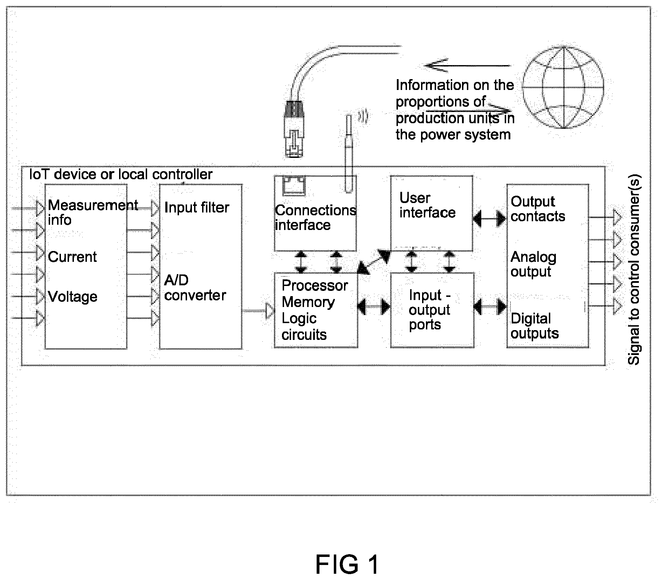

- Figure 1 - the figure illustrates an embodiment of the invention;

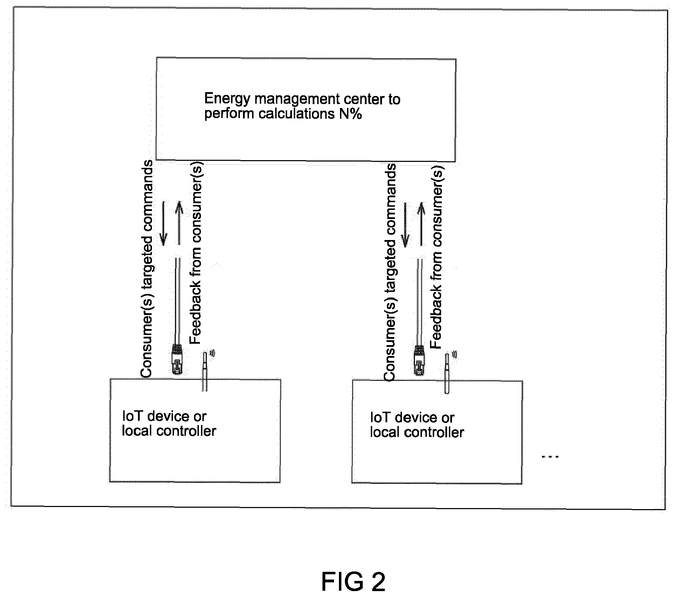

- Figure 2 - the figure illustrates the information exchange of the invention when applied in a control center;

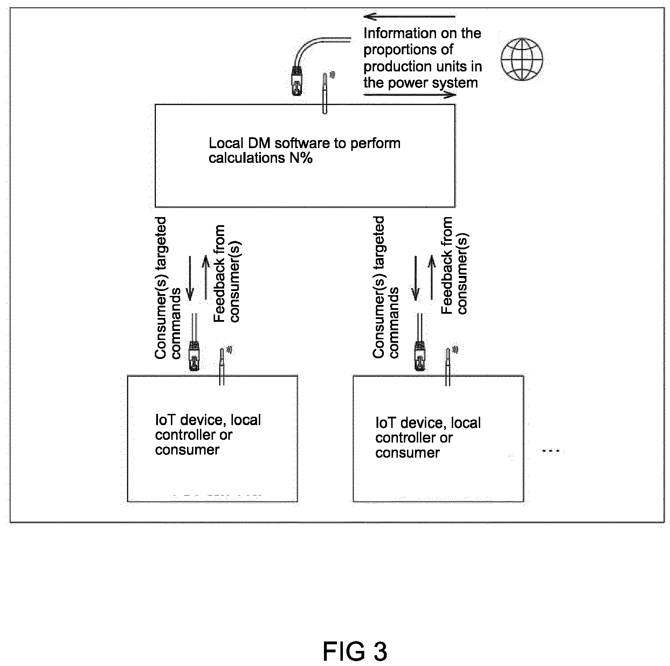

- Figure 3 - the figure illustrates the information exchange of the invention when an energy management system is applied;

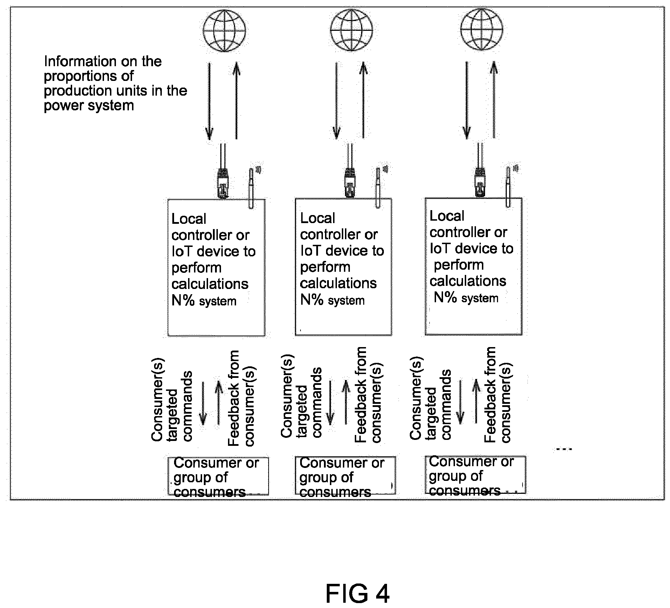

- Figure 4 - the figure illustrates the information exchange of the invention when local controllers and/or IoT devices are applied;

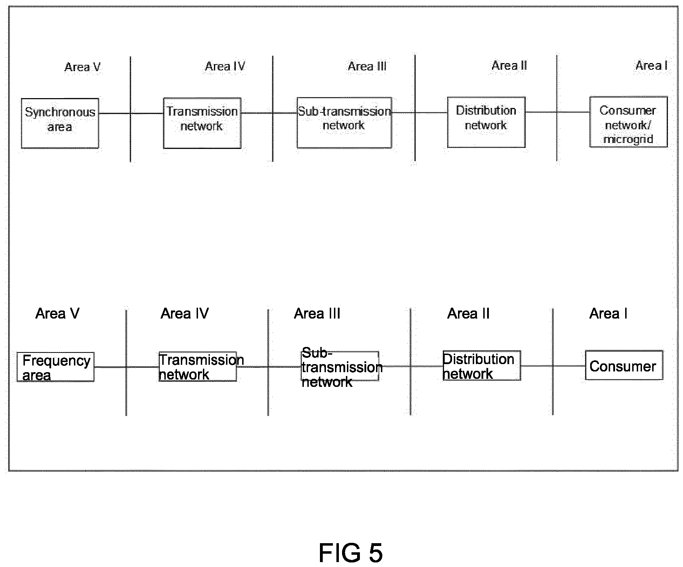

- Figure 5 - the figure illustrates the proportions of categories from the standpoint of management;

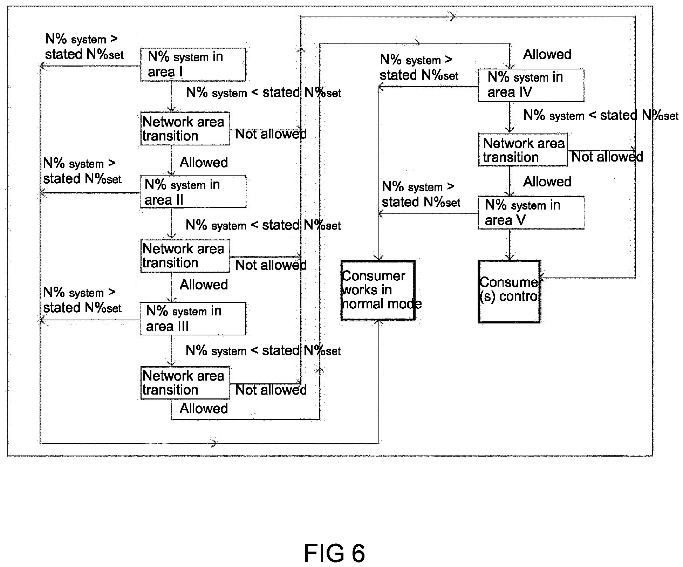

- Figure 6 - the figure illustrates the operating logic of a controller based on the proportion of capacities in the network;

- Figure 7 - explanatory figure of the exemplary embodiment.

## EXEMPLARY EMBODIMENT

The controller is set up in a way that in the network, the proportion of electricity or heat from renewable energy must be 30% of the proportion of the entire area category of the production unit of the producer.

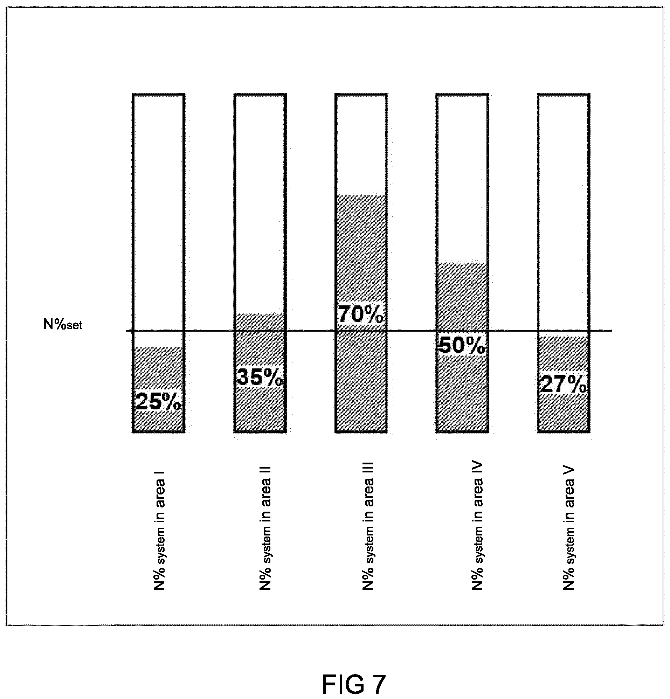

The controller measures the power of the appliance it controls in real time. Through the information exchange, the controller also receives information about the production units in the energy system. Based on the received information, the controller calculates the proportion in the local network area (first level category) from the capacity of producers using renewable energy sources as well as the units entering the network and other production units. If the calculated proportion exceeds the 30% limit set by the user (Figure 7), the controlled appliance is allowed to operate with nominal power.

If the calculated proportion is lower than the limit set by the user and the user has allowed the controller to consider the energy production units of the next level (second level category, Figure 7, column 2), the controller calculates, based on available information, the proportion based on the primary energy conforming to the next network level. When the network level of calculations changes, the controller uses the coefficients of movement into the next network area. The controller also continuously calculates the primary energy coefficient of the local network area. If the $N\%_{set}$ limit set by the user is fulfilled later on the local (lower category) level, the lower category will be restored.

If the user has not allowed movement between network areas, the controller will send a signal to the controlled appliance for limiting the power based on the lacking proportion from the set $N\%_{set}$ value in the specific network area (in other words, if the current $N\%_{system}$ proportion of renewable energy sources in the area on local level is below 20% of the $N\%_{set}$ value set by the user, e.g. 18%, then, based on the deficiency from the limit, the controller will reduce the power of the controlled appliance by 10% of the maximum, as the deficiency from the limit set by the user in the area is 10%). In the case of lack of capability to reduce the proportional power of the appliance, energy consumption is restricted for the appliance.

If, additionally, the next network area does not fulfill the $N\%_{set}$ limit set by the user, the controller will again apply the described logic, based on user settings. Such logic will function until:

a) the $N\%_{set}$ limit set by the user has been achieved in the calculated area,

b) the $N\%_{set}$ limit has been achieved in some sub-category,

c) the calculation reaches the highest level category.

In order to avoid excessive alternation between areas and fluctuation of the power of the appliance, the user can set a minimum period for the controller, during which the controller can not perform transfers to an area and/or control the appliance.

When the highest network area is reached and the $N\%_{set}$ limit is not fulfilled, the controller applies the above-described logic of consumption management or removes the appliance from its control based on the preferences of the user.

## Claims

1. Method for energy consumption management based on the principle of primary energy shares in the system, where the energy system includes a controller monitoring the proportion of capacities of energy production units of different levels in the power network on the basis of importing and different primary energy sources used by the types of relevant production units, wherein based on the amount of energy entering the area and the amount of energy input to the network by local production units, the proportion in percentage is calculated ($N\%_{system}$), based on which the user can set the usage limits of the primary energy type originating from local energy production on each level for consumption management, wherein a signal is issued to the appliance for operation, based on which the appliance adjusts the power output; based on the primary energy types and proportions of production units, $CO_2$ emission of the controlled appliance or consumer is calculated in real time, and the user is enabled to control appliances based on the level of $CO_2$ emission in power network.

IoT device or local controller

Measurement info

Current

Voltage

Input filter

A/D converter

Information on the proportions of production units in the power system

Connections interface

User interface

Processor Memory Logic circuits

Input - output ports

Output contacts

Analog output

Digital outputs

Signal to control consumer(s)

FIG 1

Energy management center to
perform calculations N%

Consumer(s) targeted commands

Feedback from consumer(s)

Consumer(s) targeted commands

Feedback from consumer(s)

IoT device or
local controller

IoT device or
local controller

- - -

FIG 2

Information on the
proportions of
production units in
the power system

Local DM software to perform
calculations N%

Consumer(s) targeted
commands

Feedback from
consumer(s)

Consumer(s) targeted
commands

Feedback from
consumer(s)

IoT device, local
controller or
consumer

IoT device, local
controller or
consumer

. . .

FIG 3

Information on the
proportions of
production units in the
power system

Local
controller or
IoT device to
perform
calculations
N% system

Local
controller or
IoT device to
perform
calculations
N% system

Local
controller or
IoT device to
perform
calculations
N% system

Consumer(s)
targeted
commands

Feedback from
consumer(s)

Consumer(s)
targeted
commands

Feedback from
consumer(s)

Consumer(s)
targeted
commands

Feedback from
consumer(s)

Consumer or
group of
consumers

Consumer or
group of
consumers

Consumer or
group of
consumers

FIG 4

| Area V | Area IV | Area III | Area II | Area I |
|---|---|---|---|---|
| Synchronous area | Transmission network | Sub-transmission network | Distribution network | Consumer network/ microgrid |

| Area V | Area IV | Area III | Area II | Area I |
|---|---|---|---|---|
| Frequency area | Transmission network | Sub-transmission network | Distribution network | Consumer |

# FIG 5

N% system >
stated N%set

N% system in
area I

N% system < stated N%set

Network area
transition    Not allowed

N% system >
stated N%set

Allowed

N% system in
area II

N% system < stated N%set

Network area
transition    Not allowed

N% system >
stated N%set

Allowed

N% system in
area III

N% system < stated N%set

Network area
transition    Not allowed

Allowed

N% system >
stated N%set

N% system in
area IV

Allowed

N% system < stated N%set

Network area
transition    Not allowed

N% system >
stated N%set

Allowed

N% system in
area V

Consumer
works in
normal mode

Consumer
(s) control

**FIG 6**

FIG 7

Europäisches
Patentamt

European
Patent Office

Office européen
des brevets

## EUROPEAN SEARCH REPORT

Application Number

EP 20 18 4169

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/053848 A1 (DOI YUSUKE [JP] ET AL) 1 March 2012 (2012-03-01) * abstract; figures 1-6 * * paragraphs [0014] - [0073] * ----- | 1 | INV. G06Q50/06 G06Q10/06 H02J3/12 |
| X | US 2013/073105 A1 (SCHMID JAMES J [US] ET AL) 21 March 2013 (2013-03-21) * abstract; figures 1-7 * * paragraphs [0005], [0006], [0017] - [0026], [0030] - [0046] * ----- | 1 | |
| X | US 2012/083938 A1 (TAKAGI YASUO [JP] ET AL) 5 April 2012 (2012-04-05) * abstract; figures 1,5 * * paragraphs [0012] - [0028] * ----- | 1 | |

TECHNICAL FIELDS
SEARCHED (IPC)

G06Q
H02J

The present search report has been drawn up for all claims

| Place of search | Date of completion of the search | Examiner |
|---|---|---|
| The Hague | 23 September 2020 | Berlea, Alexandru |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 20 18 4169

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2020

| Patent document cited in search report | | Publication date | Patent family member(s) | | | Publication date |
|---|---|---|---|---|---|---|
| US 2012053848 | A1 | 01-03-2012 | CN | 102334037 | A | 25-01-2012 |
| | | | JP | 5355147 | B2 | 27-11-2013 |
| | | | JP | 2010197355 | A | 09-09-2010 |
| | | | US | 2012053848 | A1 | 01-03-2012 |
| | | | WO | 2010098455 | A1 | 02-09-2010 |
| US 2013073105 | A1 | 21-03-2013 | NONE | | | |
| US 2012083938 | A1 | 05-04-2012 | BR | PI1106788 | A2 | 02-06-2015 |
| | | | CN | 102545203 | A | 04-07-2012 |
| | | | JP | 2012080664 | A | 19-04-2012 |
| | | | JP | 2014147285 | A | 14-08-2014 |
| | | | US | 2012083938 | A1 | 05-04-2012 |

EPO FORM P0459

For more details about this annex : see Official Journal of the European Patent Office, No. 12/82